# FASCICULE DE BREVET EUROPEEN

(11) **EP 1 751 069 B1**
(45) Date de publication et mention de la délivrance du brevet: **12.10.2011**
(21) Numéro de dépôt: 05766648.9
(22) Date de dépôt: 25.05.2005
(51) Int. Cl.: C03B 5/00, C03B 3/02, B09B 3/00

(54) **PROCEDE PERMETTANT LA COMBUSTION ET L'OXYDATION COMPLETE DE LA FRACTION MINERALE D'UN DECHET TRAITE DANS UN APPAREIL DE COMBUSTION-VITRIFICATION DIRECTE**
VERFAHREN FÜR VOLLSTÄNDIGE VERBRENNUNG UND OXIDATION DER MINERALFRAKTION VON IN EINER DIREKTEN VERBRENNUNGS-VERGLASUNGSVORRICHTUNG BEHANDELTEM MÜLL
METHOD ENABLING THE COMPLETE COMBUSTION AND OXIDATION OF THE MINERAL FRACTION OF WASTE TREATED IN A DIRECT COMBUSTION-VITRIFICATION DEVICE

(30) Priorité: 26.05.2004 FR 0451035
(43) Date de publication de la demande: 14.02.2007
(73) Titulaire: Commissariat à l'Énergie Atomique et aux Énergies Alternatives, 75015 Paris (FR); COMPAGNIE GENERALE DES MATIERES NUCLEAIRES, 78140 Velizy Villacoublay (FR)
(72) Inventeur: PINET, Olivier, F-30320 POULX (FR); GIROLD, Christophe, F-84420 PIOLENC (FR)
(74) Mandataire: Poulin, Gérard
(86) Numéro de dépôt international: PCT/FR2005/050365
(87) Numéro de publication internationale: WO 2005/118492

(56) Documents cités:
- FR-A- 2 746 037
- US-A- 5 100 453
- US-A- 5 186 112
- US-B1- 6 576 807

## Description

### DOMAINE TECHNIQUE

L'invention concerne un procédé permettant de réaliser la combustion et l'oxydation complète de la fraction minérale d'un déchet traité dans un appareil de combustion-vitrification directe.

### ETAT DE LA TECHNIQUE ANTERIEURE

Depuis plusieurs années, de nombreux travaux de recherche et développement s'intéressent au problème de l'immobilisation de la fraction toxique des déchets combustibles ou des déchets mixtes (organiques et inorganiques) dans une matrice de type vitreuse ou vitro-céramique (appelée matrice de confinement), la toxicité des déchets pouvant être de nature chimique (métaux lourds) ou radioactive.

Ce type de travaux est mené par de multiples équipes de par le monde car les intérêts desdits travaux sont multiples : stabiliser le déchet à traiter, aboutir à une matrice de confinement éprouvée et durable, réduire le volume initial des déchets...

Une des solutions de l'art connu propose un procédé industriel qui permet de réaliser à la fois la combustion du déchet et la vitrification de la fraction minérale des déchets dans un appareil unique. Différentes technologies mises en oeuvre consistent à constituer par fusion un bain de verre ou matrice en fusion et à introduire à sa surface le déchet à traiter. Ainsi, la fraction organique du déchet se décompose ou brûle suivant la nature de l'atmosphère à l'intérieur de l'appareil, tandis que la fraction minérale, à la volatilité près, est incorporée de façon plus ou moins homogène dans la matrice en fusion.

Plusieurs voies technologiques ont été explorées, au niveau des laboratoires ou à des échelles industrielles, pour obtenir ces résultats.

Dans les variantes les plus souvent rencontrées, le procédé de combustion-vitrification des déchets utilise un dispositif qui comprend un creuset, qui peut être en réfractaire ou en structure métallique refroidie, fixe ou mobile en rotation autour de son axe, un moyen de chauffage et de mise en fusion de la matrice vitreuse ou vitro-céramique de confinement des déchets qui est obtenue soit par des électrodes immergées, soit par induction dans un suscepteur ou directement dans la matrice de confinement rendue conductrice, soit encore par plasma. Plusieurs modes de chauffage peuvent être associés pour obtenir l'homogénéité en température de la matrice de confinement, ainsi que l'augmentation du rendement de l'incinération. Chacune de ces configurations possède bien sûr ses avantages et ses inconvénients, mais toutes sont focalisées sur l'efficacité, la fiabilité et la simplification du procédé de combustion-vitrification.

L'objectif des procédés de combustion-vitrification des déchets est de garantir un confinement performant et durable au sein d'une matrice de type verre des éléments toxiques contenus dans le déchet initial. Or, les propriétés de confinement des déchets au sein de la matrice, c'est-à-dire la qualité et l'homogénéité de la matrice de confinement finale obtenue, dépendent fortement de la nature de l'atmosphère et des conditions de traitement en surface du bain de verre (température, accumulation de matières, brassage...). Une matrice de confinement fortement hétérogène incluant des phases démixées métalliques de tailles importantes, voire des strates de différentes natures, est donc préjudiciable en terme de stockage de déchets, en particulier de déchets dangereux.

Les phénomènes chimiques en cours d'incinération ou d'interaction entre le déchet à traiter et la matrice en fusion peuvent conduire à de telles hétérogénéités.

Par exemple, lors de l'incinération de déchets riches en minéraux, ceux-ci peuvent rapidement former des espèces métalliques ou des sulfures, longs à oxyder, et qui par différence de densité vont quasi irrémédiablement traverser la surface du bain et sédimenter. C'est le cas, par exemple, des sulfures de nickel ou de fer qui s'accumulent au fond du bain de verre, entraînant éventuellement avec eux des radioéléments dans le cas de déchets radioactifs.

Plus simplement, les phénomènes de réduction chimique seuls peuvent conduire à la réduction d'espèces à l'état de métal en surface du bain si leur temps de séjour à cet endroit, sensé être oxydant, est trop faible pour permettre leur oxydation.

A titre d'exemple, US-B-6576807 décrit un tel procédé de traitement de déchets organiques, mis en oeuvre dans un réacteur renfermant un bain de verre fondu surmonté d'une phase gazeuse, le procédé comprenant l'incinération, en présence d'oxygène, des déchets à la surface dudit bain de verre fondu, et la vitrification desdits déchets incinérés dans le bain de verre fondu.

Les différentes technologies de l'art connu mises en oeuvre ne sont pas toutes égales devant ces phénomènes chimiques et d'interactions. Celles créant des atmosphères réductrices en surface du bain de verre sont les plus productrices de ces phases hétérogènes. Par ailleurs, si les technologies utilisant des plasmas d'oxygène permettent de diminuer sensiblement ces phénomènes, elles ne parviennent cependant pas à les éviter totalement. Les études visant à terminer l'oxydation de ces phases au sein de la matrice vitreuse ne permettent pas à ce jour de supprimer quantitativement ces phénomènes.

Le but du procédé de combustion-vitrification décrit ci après est donc de remédier à ces inconvénients en permettant aux déchets et à leurs sous-produits de décomposition de s'oxyder suffisamment à la surface du bain de verre pour que les minéraux puissent s'incorporer au verre sans générer de phases sédimentées au fond du creuset de fusion.

### EXPOSÉ DE L'INVENTION

Ce but est atteint par un procédé permettant la combustion et l'oxydation complète de la fraction minérale d'un déchet combustible contenu dans un appareil destiné au traitement par combustion-vitrification directe de déchets, ledit procédé comprenant les étapes suivantes :
- une étape d'introduction dudit déchet dans l'appareil pour le déposer sur la surface d'un bain de verre en fusion contenu dans l'appareil,
- une étape de combustion et d'oxydation du déchet à la surface du bain de verre,
- une étape d'incorporation des produits de combustion dans le verre pendant laquelle le bain de verre, les produits de combustion, et d'éventuels adjuvants de vitrification ajoutés au bain de verre sont chauffés jusqu'à obtenir une masse liquide pâteuse,
- une étape pendant laquelle ladite masse est enlevée de l'appareil et laissée à refroidir pour obtenir au final ce qu'on appelle une matrice de confinement,
ledit procédé étant caractérisé en ce que la combustion et l'oxydation complète de la fraction minérale du déchet sont réalisées, pour une part, au cours de l'étape d'introduction du déchet et pour une autre part, au cours de l'étape de combustion et d'oxydation du déchet à la surface du bain de verre, grâce à la présence de moyens de maintien permettant de maintenir le déchet, pendant une durée déterminée, sous des vapeurs oxydantes émanant de gaz introduits dans l'appareil, lesdits moyens de maintien du déchet comprenant une couche de surface, appelée couche de protection temporaire (4), présente à la surface du bain de verre, qui permet de maintenir le déchet à la surface du bain de verre, pendant une durée déterminée, sous lesdites vapeurs oxydantes émanant des gaz introduits dans l'appareil, ladite couche ayant un coefficient de tension superficielle plus élevée que celui du bain de verre fondu.

La couche de protection temporaire du bain de verre est une couche permettant le maintien des produits de combustion au-dessus de la surface du bain de verre pendant une durée déterminée. La couche de protection temporaire de surface possède ainsi des propriétés physico-chimiques qui lui permettent d'assurer, sur une durée suffisante, le maintien en surface du bain de verre des produits à traiter et des sous-produits en cours d'oxydation.

Avantageusement, la couche de protection temporaire est réalisée selon l'une au moins des étapes suivantes :
- abaissement de la température de la surface du bain de verre,
- ajout de matière au-dessus de la surface du bain de verre.

Selon un mode de réalisation particulier, la couche de protection temporaire est complétée par l'ajout d'au moins une autre couche de surface, appelée sur-couche de protection temporaire, ladite au moins une sur-couche de protection temporaire ayant au moins l'une des fonctions suivantes :
- développer, sous l'effet du poids des déchets qui lui sont superposés, des forces inter faciales avec la couche de protection temporaire améliorant la non pénétration dans le bain de verre des particules issues desdits déchets,
- améliorer la répartition des contraintes mécaniques sur l'ensemble de la surface de la couche de protection temporaire grâce à un enchevêtrement des constituants de ladite sur-couche de protection temporaire ou à des liaisons chimiques qui solidarisent ladite sur-couche de protection temporaire,
- protéger la couche de protection temporaire d'une attaque chimique par les déchets.

Selon un cas particulier, au moins la couche de protection temporaire ou la ou les sur-couches de protection temporaires sont éliminées, avant l'étape d'incorporation, par action chimique. Il peut s'agir de l'action chimique des éléments qui l'entourent, c'est-à-dire des autres sur-couches, ou d'éléments ajoutés spécialement dans ce but.

Selon un autre cas particulier, au moins la couche de protection temporaire ou la ou les sur-couches de protection temporaires sont éliminées, avant l'étape d'incorporation, par un moyen choisi parmi une élévation de la température du bain de verre, le bullage de la surface du bain de verre, une méthode mécanique ou une méthode utilisant les mouvements thermohydrauliques du bain de verre.

Avantageusement, la couche de protection temporaire et la ou les sur-couches de protection temporaires ont une composition chimique qui est compatible avec la composition du bain de verre. Ainsi, les constituants de ces couches de protection peuvent au final être incorporés dans le bain de verre.

Selon un premier mode de réalisation particulier, la couche de protection temporaire et la ou les sur-couches de protection temporaires sont réalisées en dispersant, à la surface du bain de verre, de la matière divisée choisie parmi des poudres, des frittes, des paillettes ou des fibres.

Selon un deuxième mode de réalisation particulier, la couche de protection temporaire et la ou les sur-couches de protection temporaires sont réalisées en dispersant, à la surface du bain de verre ou à la surface d'une couche déjà déposée, de la matière sous forme de gel. Le gel a l'avantage de s'étendre plus facilement que la matière divisée et permet de recouvrir plus facilement la totalité de la surface à protéger.

Selon un troisième mode de réalisation particulier, la couche de protection temporaire et la ou les sur-couches de protection temporaires sont préfabriquées et déposées directement à la surface du bain de verre ou à la surface d'une couche déjà déposée.

Avantageusement, les moyens de maintien comprennent en outre un support rigide permettant de maintenir le déchet, pendant une durée déterminée, sous des vapeurs oxydantes émanant de gaz introduits dans l'appareil, au cours de l'étape d'introduction du déchet dans l'appareil.

Avantageusement, le procédé comprend en outre une étape d'ajout d'oxydants au déchet, au cours de l'étape d'introduction du déchet et au cours de l'étape de combustion et d'oxydation du déchet à la surface du bain de verre. Les agents oxydants utilisés peuvent être, outre des gaz contenant de l'oxygène, des liquides ou des solides ajoutés au déchet ou aux produits de combustion en cours de traitement au-dessus du bain de verre. Ainsi, le support permettant de maintenir le déchet permet de retarder la pénétration du déchet dans le bain de verre avant que l'étape de combustion dudit déchet, ainsi que l'oxydation des sous produits de combustion de ce déchet, ne soit achevée : le déchet brûle à l'oxygène des gaz envoyés à la surface du bain de verre et l'on ajoute éventuellement des oxydants liquides ou solides pour achever ou accélérer la réaction d'oxydation des sous-produits de combustion du déchet. Ce procédé permet l'incinération complète des matières combustibles et l'oxydation suffisante des minéraux préalablement à leur incorporation dans la matrice vitreuse, évitant ainsi l'obtention d'une matrice de confinement dont les qualités seraient dénaturées par l'inclusion de phases réduites liées à un défaut d'oxydation au cours du procédé.

Avantageusement, le déchet combustible est un déchet mixte organique et minéral.

L'un des avantages de ce procédé d'oxydation complète des fractions minérales du déchet combustible est qu'il est simple de mise en oeuvre et facilement adaptable à chaque problème posé grâce à la variation possible de la nature du support supportant le déchet au cours de son introduction dans le procédé, de la nature physico-chimique de la couche protectrice, de la nature chimique des oxydants employés et du mode de destruction de la couche protectrice. Ce procédé peut majoritairement trouver des applications dans le domaine du traitement des déchets radioactifs combustibles que l'on souhaite vitrifier. On peut citer comme exemple le traitement de matières riches en soufre, risquant de réagir avec le bain de verre ou de créer des sulfures au cours de leur incinération, des résines échangeuses d' ions, des sels enrobés dans une matrice organique, des boues...

Par extension, des applications pour déchets industriels spéciaux peuvent également être envisagées.

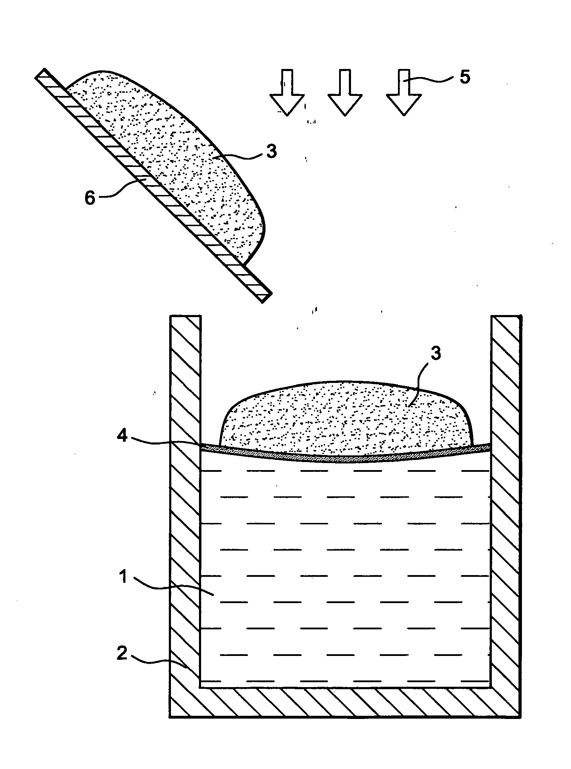

### BRÈVE DESCRIPTION DU DESSIN

L'invention sera mieux comprise et d'autres avantages et particularités apparaîtront à la lecture de la description qui va suivre, donnée à titre d'exemple non limitatif, accompagnée du dessin annexé de la figure qui est un schéma illustrant une vue en coupe du dispositif utilisé pour la mise en oeuvre du procédé de l'invention.

### EXPOSÉ DÉTAILLÉ DE MODES DE RÉALISATION PARTICULIERS

Sur la figuré, on peut voir un creuset 2 comportant un bain de verre en fusion 1 à la surface duquel peut être formée une couche de protection 4. A l'aide d'un système d'alimentation 6, on verse des déchets à la surface du bain de verre. Ce système d'alimentation 6 peut également servir de support ou système de maintien des déchets 3, ce qui permet de réaliser, au cours de l'étape d'incorporation des déchets dans le creuset 2, une partie de la combustion des déchets 3. La référence 5 désigne des gaz, des solides ou des liquides ajoutés dans le creuset pour agir sur l'oxydation et la combustion des déchets 3. Il peut s'agir d'un flux d'oxygène gazeux et/ou d'un plasma d'oxygène appliqué au déchet 3 (également dénommé sous le terme de charge réactive), et/ou d'oxydants solides ou liquides, et/ou d'adjuvants de vitrifications (fritte de verre, silice, carbonates, oxydes divers...).

Pour atteindre l'objectif visé, à savoir éviter la non incorporation au verre d'espèces réduites de type métal ou sulfure, par exemple, et éviter ultérieurement des phénomènes de sédimentation, il convient d'assurer au-dessus du bain de verre la combustion du déchet jusqu'à l'oxydation complète des minéraux qu'il contient. Le support du déchet par une pièce mécanique au cours de l'étape d'incorporation ou d'alimentation des déchets dans l'appareil ou le maintien des produits de combustion grâce à une couche de protection 4 permet en particulier l'incinération complète des matières combustibles et l'oxydation suffisante des matières minérales pour leur incorporation dans une matrice de confinement. Ces deux modes de maintien permettent de faire réagir au-dessus de la surface du bain de verre les déchets à traiter soit avec des gaz contenant de l'oxygène, soit avec des oxydants solides ou liquides (nitrates, sulfates, acide nitrique, acide sulfurique...). Les oxydants gazeux, liquides ou solides peuvent être ajoutés à la charge réactive l'un après l'autre ou en même temps. Leurs choix dépend du déchet considéré, des contraintes liées au procédé, de la compatibilité des éléments chimiques apportés par les oxydants utilisés avec la composition du verre final.

On a vu plus haut que la fonctionnalité principale de la couche de protection 4 est d'augmenter le coefficient de tension superficielle à la surface du bain de verre 1. Pour assurer cette fonction, la couche de protection temporaire a un coefficient de tension superficielle plus élevé que celui du verre fondu à sa température d'élaboration (correspondant à une viscosité d'environ 100 dPa.s). Cette couche permet d'empêcher, par le "développement de forces inter faciales, avec les particules à son contact, la pénétration de matières indésirables à l'intérieur du bain de verre.

Par ailleurs, le maintien du déchet au-dessus du bain de verre assuré par un support rigide 6 au cours de l'étape d'incorporation des déchets dans l'appareil ou la couche de protection 4 à la surface du bain de verre sont par définition temporaires. Il est utile durant la période de combustion et d'oxydation des déchets. La couche de protection est appelée à être détruite pour entrer dans la composition finale de la matrice vitreuse élaborée. La destruction de la couche de protection peut être réalisée naturellement, c'est à dire que la couche est éliminée par corrosion. Elle peut résulter soit de l'effet de la technologie mise en oeuvre pour réaliser le traitement de combustion-vitrification (par exemple, une élévation de la température du bain de verre, notamment en utilisant une torche à plasma), soit de l'ajout, au sein de ces couches de protection, de réactifs qui vont dissoudre la couche après un temps de séjour correspondant à la durée de vie souhaitée de ladite couche. Une attaque chimique par des éléments ajoutés en fin de période de combustion peut être particulièrement intéressante, si ces éléments entrent dans la composition du verre final. La composition chimique de la ou les couches de protection doit donc être de préférence compatible avec la composition de ladite matrice. On choisit donc, de préférence, pour la composition des couches et sur-couches de protection des éléments entrant dans la composition de la matrice vitreuse. Ces éléments ajoutés peuvent aussi, en fonction de leur forme chimique d'introduction (oxydant, réducteur...), et préalablement à la destruction de la couche de protection ou de la sur-couche, participer à des réactions avec des produits issus des déchets 3.

### EXEMPLE DE MISE EN OEUVRE DU PROCEDE DE L'INVENTION

On utilise une fonte verrière de type borosilicaté principalement constituée de 41,5% SiO₂ (silice), 18,5% B₂O₃ (anhydride borique), 10% Al₂O₃ (alumine), 20% Na₂O (oxyde de sodium), 5% de Fe₂O₃. Cette fonte verrière a une viscosité de 40 dPa.s environ à 1200°C. La masse de la fonte verrière utilisée pour les expériences est de 300 g et offre une surface de 7,3.10⁻³ m². Les déchets 3 portés à la surface du bain de verre formé à partir de cette fonte verrière sont un mélange de 25 g de poudres contenant du coke (simulant la fraction organique d'un déchet incinérable), du sulfate de baryum, des oxydes de nickel, fer et cuivre. A cela sont ajoutées deux billes de sulfures de diamètre 5 mm.

Après un traitement d'une heure à 1200°C sous air et en l'absence d'une couche de protection 4, de nombreuses billes d'aspect métallique sont retrouvées au fond du creuset, mettant en évidence les phénomènes dont on souhaite éviter l'apparition.

On reproduit cette expérience en plaçant cette fois-ci sur le bain de verre 1 une couche de protection 4 riche en silice et ayant une épaisseur d'environ 2mm. La couche de protection forme ainsi avec la fonte verrière, remontée par capillarité, un mélange visqueux contenant des fines particules de silice partiellement dissoutes. Après un traitement d'une heure à 1200°C sous air, on remarque qu'aucune bille n'a traversé la surface du bain de verre. En fait, les déchets 3 ont pour une bonne part brûlé et de nombreuses billes métalliques ont été formées qui, grâce à la couche de protection temporaire de surface 4, sont restées au-dessus de la surface du bain de verre. La présence de ces billes s'explique par le fait que l'apport en oxygène est insuffisant en quantité pour terminer l'oxydation des déchets.

Notons que dans le cas exposé ci-dessus, on n'a pas besoin d'ajouter de sur-couches à la couche de protection 4 pour maintenir le déchet et les produits de combustion en surface.

L'élimination de cette couche de protection est obtenue dans les mêmes conditions de température par l'ajout de Na₂B₄O₇. Notons que ces espèces chimiques de destruction de la couche de protection ont été choisies pour entrer dans la composition du verre final.

La même expérience est reproduite à l'échelle industrielle : 30 kg de fonte verrière sont chauffés par induction directe dans un creuset en métal refroidi et surplombé par un dispositif de génération d'un plasma d'arc d'oxygène transféré entre deux torches métalliques, on traite 3 kg de déchets du même type que précédemment sur une couche protectrice. A la fin du procédé de combustion-vitrification, on aboutit aux mêmes conclusions que celles obtenues précédemment : les nombreuses billes métalliques formées au cours du procédé sont restées au-dessus de la surface du bain de verre grâce à l'établissement d'une couche de quelques millimètres riche en grains de silice.

La présence des nombreuses billes métalliques est le signe d'une oxydation partielle des minéraux. Cela est dû au fait que l'atmosphère est insuffisamment oxydante.

Dans un autre exemple, la combustion totale de 300 g de déchet organique contenant 120 g de minéraux, dont du sulfate de baryum, des oxydes de fer, de nickel et de cuivre est obtenue après maintien sous une torche à plasma pendant une durée de moins de 7 minutes.

Dans un creuset réfractaire, 22,45 g des produits de combustion prélevés sont ensuite déposés sur 200 g de verre borosilicaté et sont ensuite recouverts de 60 g de verre borosilicaté et de 107 g de nitrate de sodium. Le mélange est introduit à 1200°C dans un four. Les minéraux sont incorporés au verre en totalité et on observe qu'aucune bille ne sédimente au fond du creuset. Le temps de séjour prolongé sous l'oxygène de la torche à plasma et l'ajout d'un oxydant a permis d'empêcher la formation d'espèces réduites sédimentées. L'absence, d'ajouts d'oxydants liquides ou gazeux, un temps de séjour trop court sous le plasma d'oxygène, un maintien insuffisant du déchet au-dessus du bain de verre ne permettent pas d'aboutir à ce résultat.

Dans une application pratique du procédé selon l'invention consistant à réaliser une ou plusieurs couches protectrices sur un bain de verre en fusion, le four de combustion-vitrification est de préférence conçu en multizones. En particulier, une partie du creuset est destinée à l'incinération proprement dite des déchets (comportant le dispositif d'introduction et de maintien du déchet, l'établissement de la couche de protection et l'ajout d'oxydants), une autre partie est destinée à l'affinage du verre (et par la même occasion au recyclage des poussières d'épuration des gaz).

## Revendications

1. Procédé permettant la combustion et l'oxydation complète de la fraction minérale d'un déchet combustible contenu dans un appareil (2) destiné au traitement par combustion-vitrification directe de déchets (3), ledit procédé comprenant les étapes suivantes :
- une étape d'introduction dudit déchet dans l'appareil pour le déposer sur la surface d'un bain de verre (1) en fusion contenu dans appareil (2),
- une étape de combustion et d'oxydation du déchet à la surface du bain de verre (1),
- une étape d'incorporation des produits de combustion dans le verre pendant laquelle le bain de verre (1), les produits de combustion, et d'éventuels adjuvants de vitrification ajoutés au bain de verre sont chauffés jusqu'à obtenir une masse liquide pâteuse,
- une étape pendant laquelle ladite masse est enlevée de l'appareil (2) et laissée à refroidir pour obtenir au final ce qu'on appelle une matrice de confinement,
ledit procédé étant **caractérisé en ce que** la combustion et l'oxydation complète de la fraction minérale du déchet sont réalisées, pour une part, au cours de l'étape d'introduction du déchet et pour une autre part, au cours de l'étape de combustion et d'oxydation du déchet à la surface du bain de verre, grâce à la présence de moyens de maintien permettant de maintenir le déchet, pendant une durée déterminée, sous des vapeurs oxydantes émanant de gaz introduits dans l'appareil, lesdits moyens de maintien du déchet comprenant une couche de surface, appelée couche de protection temporaire (4), présente à la surface du bain de verre (1), qui permet de maintenir le déchet à la surface du bain de verre (1), pendant une durée déterminée, sous lesdites vapeurs oxydantes émanant des gaz introduits dans l'appareil (2), ladite couche ayant un coefficient de tension superficielle plus élevée que celui du bain de verre fondu (1),

2. Procédé selon la revendication précédente, **caractérisé en ce que** la couche de protection temporaire (4) est réalisée selon l'une au moins des étapes suivantes :
- abaissement de la température de la surface du bain de verre (1),
- ajout de matière au-dessus de la surface du bain de verre.

3. Procédé selon la revendication 1, **caractérisé en ce que** la couche de protection temporaire (4) est complétée par l'ajout d'au moins une autre couche de surface, appelée sur-couche de protection temporaire, ladite au moins une sur-couche de protection temporaire ayant au moins l'une des fonctions suivantes :
- développer, sous l'effet du poids des déchets qui lui sont superposés, des forces inter faciales avec la couche de protection temporaire améliorant la non pénétration dans le bain de verre des particules issues desdits déchets,
- améliorer la répartition des contraintes mécaniques sur l'ensemble de la surface de la couche de protection temporaire grâce à un enchevêtrement des constituants de ladite sur-couche de protection temporaire ou à des liaisons chimiques qui solidarisent ladite sur-couche de protection temporaire,
- protéger la couche de protection temporaire d'une attaque chimique par les déchets.

4. Procédé selon l'une quelconque des revendications 1 ou 3, **caractérisé en ce qu'**au moins la couche de protection temporaire ou la ou les sur-couches de protection temporaires sont éliminées, avant l'étape d'incorporation, par action chimique.

5. Procédé selon l'une quelconque des revendications 1 ou 3, **caractérisé en ce qu'**au moins la couche de protection temporaire ou la ou les sur-couches de protection temporaires sont éliminées, avant l'étape d'incorporation, par un moyen choisi parmi une élévation de la température du bain de verre (1), le bullage de la surface du bain de verre (1), une méthode mécanique ou une méthode utilisant les mouvements thermohydrauliques du bain de verre.

6. Procédé selon l'une quelconque des revendications 1 à 5, **caractérisé en ce que** la couche de protection temporaire et la ou les sur-couches de protection temporaires ont une composition chimique qui est compatible avec la composition du bain de verre (1).

7. Procédé selon l'une quelconque des revendications 1 à 6, **caractérisé en ce que** la couche de protection temporaire et la ou les sur-couches de protection temporaires sont réalisées en dispersant, à la surface du bain de verre, de la matière divisée choisie parmi des poudres, des frittes, des paillettes ou des fibres.

8. Procédé selon l'une quelconque des revendications 1 à 6, **caractérisé en ce que** la couche de protection temporaire et la ou les sur-couches de protection temporaires sont réalisées en dispersant, à la surface du bain de verre ou à la surface d'une couche déjà déposée, de la matière sous forme de gel.

9. Procédé de protection selon l'une quelconque des revendications 1 à 6, **caractérisé en ce que** la couche de protection temporaire et la ou les sur-couches de protection temporaires sont préfabriquées et déposées directement à la surface du bain de verre (1) ou à la surface d'une couche déjà déposée.

10. Procédé selon l'une quelconque des revendications précédentes, **caractérisé en ce que** les moyens de maintien comprennent en outre un support rigide permettant de maintenir le déchet, pendant une durée déterminée, sous des vapeurs oxydantes émanant de gaz introduits dans l'appareil, au cours de l'étape d'introduction du déchet dans l'appareil.

11. Procédé selon l'une quelconque des revendications précédentes, **caractérisé en ce que** le procédé comprend en outre une étape d'ajout d'oxydants au déchet, au cours de l'étape d'introduction du déchet et au cours de l'étape de combustion et d'oxydation du déchet à la surface du bain de verre.

12. Procédé selon l'une quelconque des revendications précédentes, **caractérisé en ce que** le déchet combustible est un déchet mixte organique et minéral.

## Claims

1. A process for combustion and complete oxidation of the mineral fraction of combustible waste contained in an apparatus (2) designed for direct combustion-vitrification treatment of waste (3), said process comprising the following steps:
- an introduction step of said waste into the apparatus for depositing it onto the surface of a molten glass bath (1) contained in the apparatus (2),
- a combustion and oxidation step of the waste on the surface of the glass bath (1),
- an incorporation step of combustion products into the glass during which the glass bath (1), the combustion products, and optional vitrification additives added to the glass bath (1) are heated to obtain a pasty liquid mass,
- a step during which said mass is removed from the apparatus (2) and left to cool to produce the final product called a confinement matrix,
said process being **characterised in that** combustion and complete oxidation of the mineral fraction of the waste are carried out for one part during the introduction step of the waste and for another part during the combustion and oxidation step of the waste on the surface of the glass bath, due to the presence of holding means for holding the waste, during a determined period, in oxidising vapours emanating from gases introduced into the apparatus, said holding means of the waste comprising a surface layer, called a temporary protective layer (4), present at the surface of the glass bath (1), which holds the waste on the surface of the glass bath (1), for a predetermined period, in said oxidising vapours emanating from the gases introduced into the apparatus (2), said layer having a higher surface tension coefficient than that of the molten glass bath (1).

2. The process as claimed in the preceding claim, **characterised in that** the temporary protective layer (4) is formed according to at least one of the following steps:
- lowering of the temperature of the surface of the glass bath (1),
- addition of material above the surface of the glass bath.

3. The process as claimed in claim 1, **characterised in that** the temporary protective layer (4) is completed by addition of at least one other surface layer, called a temporary protective overlayer, said at least one temporary protective overlayer having at least one of the following functions:
- to develop, under the effect of the weight of the waste superposed thereon, inter-facial forces with the temporary protective layer improving non-penetration of the particles originating from said waste into the glass bath,
- to improve distribution of the mechanical stresses on the entire surface of the temporary protective layer due to interlocking of the constituents of said temporary protective overlayer or to chemical bonds which solidify said temporary protective overlayer,
- to protect the temporary protective layer of chemical attack by the waste.

4. The process as claimed in any one of claims 1 or 3, **characterised in that** at least the temporary protective layer or the temporary protective overlayer or the temporary protective overlayers are eliminated, prior to the incorporation step, by chemical action.

5. The process as claimed in any one of claims 1 or 3, **characterised in that** at least the temporary protective layer or the temporary protective overlayer or the temporary protective overlayers are eliminated, prior to the incorporation step, by way of means selected from elevation of the temperature of the glass bath (1), the bubbling of the surface of the glass bath (1), a mechanical method or a method using the thermohydraulic movements of the glass bath.

6. The process as claimed in any one of claims 1 to 5, **characterised in that** the temporary protective layer and the temporary protective overlayer or the temporary protective overlayers have a chemical composition which is compatible with the composition of the glass bath (1).

7. The process as claimed in any one of claims 1 to 6, **characterised in that** the temporary protective layer and the temporary protective overlayer or the temporary protective overlayers are made by dispersing, on the surface of the glass bath, divided material selected from powders, frits, chips or fibres.

8. The process als claimed in any one of claims 1 to 6, **characterised in that** the temporary protective layer and the temporary protective overlayer or the temporary protective overlayers are made by dispersing, on the surface of the glass bath or on the surface of a layer already deposited, of material in gel form.

9. The protective process as claimed in any one of claims 1 to 6, **characterised in that** the temporary protective layer and the temporary protective overlayer or the temporary protective overlayers are prefabricated and deposited directly onto the surface of the glass bath (1) or onto the surface of a layer already deposited.

10. The process as claimed in any one of the preceding claims, **characterised in that** the holding means further comprise a rigid support for holding the waste, for a determined period, in oxidising vapours emanating from gases introduced into the apparatus, during the introduction step of the waste into the apparatus.

11. The process as claimed in any one of the preceding claims, **characterised in that** the process further comprises an addition step of oxidants to the waste, during the introduction step of the waste and during the combustion and oxidation step of the waste to the surface of the glass bath.

12. The process as claimed in any one of the preceding claims, **characterised in that** the combustible waste is mixed organic and mineral waste.

## Patentansprüche

1. Verfahren, das die Verbrennung und vollständige Oxidation der mineralischen Fraktion eines brennbaren Abfalls ermöglicht, der in einer Vorrichtung (2) aufgenommen ist, die zum Behandeln mittels Direkt-Verbrennen-Verglasen von Abfällen (3) bestimmt ist, wobei das Verfahren die folgenden Schritte beinhaltet:
- einen Schritt, bei dem der Abfall in die Vorrichtung eingebracht wird, um diesen auf der Oberfläche eines Bades von geschmolzenem Glas (1) abzusetzen, das in die Vorrichtung (2) aufgenommen ist,
- einen Schritt einer Verbrennung und Oxidation des Abfalls auf der Oberfläche des Glasbades (1),
- einen Schritt des Inkorporierens der Verbrennungsprodukte in das Glas, während dem das Glasbad (1), die Verbrennungsprodukte und eventuelle dem Glasbad zugesetzte Verglasungshilfsstoffe erhitzt werden, bis eine pastenartige flüssige Masse erzielt wird,
- einen Schritt, während dem die Masse aus der Vorrichtung (2) entnommen wird und erkalten lassen wird, um schließlich eine sogenannte Einschließungsmatrize zu erzielen,
wobei das Verfahren **dadurch gekennzeichnet ist, dass** die Verbrennung und vollständige Oxidation der mineralischen Fraktion des Abfalls einesteils im Verlauf des Schrittes des Einbringen des Abfalls und andernteils im Verlauf des Schrittes der Verbrennung und Oxidation des Abfalls auf der Oberfläche des Glasbades erfolgen, dank des Vorhandenseins von Haltemitteln, die es ermöglichen, dem Abfall während einer bestimmten Zeitdauer unter oxidierenden Dämpfen zu halten, die von den in die Vorrichtung eingebrachten Gasen stammen, wobei die Mittel zum Halten des Abfalls eine Oberflächenschicht aufweisen, die als temporäre Schutzschicht (4) bezeichnet wird, die auf der Oberfläche des Glasbades (1) vorhanden ist und die ermöglicht, den Abfall auf der Oberfläche des Glasbades (1) während eines bestimmten Zeitraums unter den oxidierenden Dämpfen zu halten, die von den in die Vorrichtung (2) eingebrachten Gasen stammen, wobei die erwähnte Schicht einen höheren Oberflächenspannungskoeffizienten als das Bad aus geschmolzenem Glas (1) hat.

2. Verfahren nach dem vorhergehenden Anspruch, **dadurch gekennzeichnet, dass** die temporäre Schutzschicht (4) gemäß einem der folgenden Schritte realisiert wird:
- Senken der Temperatur der Oberfläche des Glasbades (1),
- Zusetzen von Material oberhalb der Oberfläche des Glasbades.

3. Verfahren nach Anspruch 1, **dadurch gekennzeichnet, dass** die temporäre Schutzschicht (4) durch das Zusetzen mindestens einer weiteren Oberflächenschicht, die als temporäre Über-Schutzschicht bezeichnet wird, vervollständigt wird, wobei die mindestens eine temporäre Über-Schutzschicht mindestens eine der folgenden Funktionen hat:
- unter dem Einfluss des Gewichtes der darüberliegenden Abfälle, Grenzflächenkräfte mit der temporären Schutzschicht zu entwickeln, welche das Nicht-Eindringen in das Glasbad von Partikeln, die von den Abfällen stammen, verbessern,
- Verbessern der Verteilung von mechanischen Beanspruchungen auf die gesamte Oberfläche der temporären Schutzschicht, und zwar dank einer Verfechtung der Bestandteile der temporären Über-Schutzschicht oder dank chemischer Bindungen, welche die temporäre Über-Schutzschicht verfestigen,
- Schützen der temporären Schutzschicht vor einem chemischen Angriff der Abfälle.

4. Verfahren nach einem der Ansprüche 1 bis 3, **dadurch gekennzeichnet, dass**, vor dem Schritt einer Inkorporierung, zumindest die temporäre Schutzschicht oder die temporäre Über-Schutzschicht oder die temporären Über-Schutzschichten durch chemische Wirkung beseitigt werden.

5. Verfahren nach einem der Ansprüche 1 bis 3, dadurch gekenntzeichnet, dass, vor dem Schritt einer Inkorporierung, zumindest die temporäre Schutzschicht oder die temporäre Über-Schutzschicht oder die die temporären Über-Schutzschichten durch ein Mittel beseitigt werden, das ausgewählt ist aus Erhöhen der Temperatur des Glasbades (1), Durchperlen der Oberfläche des Glasbades (1), einer mechanischen Methode oder einer Methode, welche thermohydraulische Bewegungen des Glasbades nutzt.

6. Verfahren nach einem der Ansprüche 1 bis 5, **dadurch gekennzeichnet, dass** die temporäre Schutzschicht und die temporäre Über-Schutzschicht oder die temporären Über-Schutzschichten eine chemische Zusammensetzung haben, die mit der Zusammensetzung des Glasbades (1) kompatibel ist.

7. Verfahren nach einem der Ansprüche 1 bis 6, **dadurch gekennzeichnet, dass** die temporäre Schutzschicht und die temporäre Über-Schutzschicht oder die temporäre Über-Schutzschichten dadurch realisiert werden, dass auf der Oberfläche des Glasbades unterteiltes Material verteilt wird, das ausgewählt ist aus Pulvern, Fritten, Flocken oder Fasern.

8. Verfahren nach einem der Ansprüche 1 bis 6, **dadurch gekennzeichnet, dass** die temporäre Schutzschicht und die temporäre Über-Schutzschicht oder die temporären Über-Schutzschichten dadurch realisiert werden, dass auf der Oberfläche des Glasbades oder der Oberfläche einer bereits abgelagerten Schicht Material in Form von Gel verteilt wird.

9. Verfahren zum Schutz nach einem der Ansprüche 1 bis 6, **dadurch gekennzeichnet, dass** die temporäre Schutzschicht und die temporäre Über-Schutzschicht oder die temporären Über-Schutzschichten vorgefertigt sind und direkt auf der Oberfläche des Glasbades (1) oder der Oberfläche einer bereits abgelagerten Schicht abgesetzt werden.

10. Verfahren nach einem der vorhergehenden Ansprüche, **dadurch gekennzeichnet, dass** die Haltemittel außerdem eine starre Trägereinrichtung aufweisen, die ermöglicht, den Abfall während eines bestimmten Zeitraums unter oxidierenden Dämpfen zu halten, die von den in die Vorrichtung eingebrachten Gasen stammen, und zwar während des Schrittes des Einbringens des Abfalls in die Vorrichtung.

11. Verfahren nach einem der vorhergehenden Ansprüche, **dadurch gekennzeichnet, dass** das Verfahren weiter einen Schritt aufweist, bei dem zum Abfall Oxidationsmittel zugesetzt werden, und zwar während des Schrittes des Einbringens des Abfalls und während des Schrittes des Verbrennens und die Oxidierens des Abfalls auf der Oberfläche des Glasbades.

12. Verfahren nach einem der vorhergehenden Ansprüche, **dadurch gekennzeichnet, dass** der brennbare Abfall ein gemischt organischer und mineralischer Abfall ist.
